# EUROPÄISCHE PATENTSCHRIFT

(11) **EP 1 240 794 B1**
(45) Veröffentlichungstag und Bekanntmachung des Hinweises auf die Patenterteilung: **23.05.2012**
(21) Anmeldenummer: 00988676.3
(22) Anmeldetag: 01.12.2000
(51) Int. Cl.: H04W 12/02, G07F 7/10

(54) **Verfahren zur Verschlüsselung von Daten und Telekommunikationsendgerät und Zugangsberechtigungskarte**
Method for encrypting data and a telecommunications terminal and access authorization card
Procédé de codage de données et terminal de télécommunications et carte d'autorisation d'accés

(30) Priorität: 07.12.1999 DE 19958749; 07.04.2000 DE 10017424
(43) Veröffentlichungstag der Anmeldung: 18.09.2002
(73) Patentinhaber: IPCom GmbH & Co. KG, 82049 Pullach (DE)
(72) Erfinder: HANS, Martin, 31141 Hildesheim (DE); KOWALEWSKI, Frank, 38228 Salzgitter (DE); LAUMEN, Josef, 31141 Hildesheim (DE); SCHMIDT, Gunnar, 38304 Wolfenbuettel (DE); BAER, Siegfried, 75179 Pforzheim (DE); BECKMANN, Mark, 38102 Braunschweig (DE); ADI, Wael, 38108 Braunschweig (DE)
(74) Vertreter: Gigerich, Jan
(86) Internationale Anmeldenummer: PCT/DE2000/004278
(87) Internationale Veröffentlichungsnummer: WO 2001/043471

(56) Entgegenhaltungen:
- EP-A- 0 644 513
- US-A- 5 036 461

## Beschreibung

### Stand der Technik

Die Erfindung geht von einem Verfahren zur Verschlüsselung von Daten, von einem Telekommunikationsendgerät und von einer Zugangsberechtigungskarte nach der Gattung der unabhängigen Ansprüche aus.

Es ist beispielsweise im Mobilfunk bereits bekannt, Daten zwischen einem Diensteanbieter und einem Mobiltelefon über ein Mobilfunknetz zu übertragen, beispielsweise um Internet-E-Mails vom Diensteanbieter in das Mobiltelefon zu laden. Dabei ist es beispielsweise für ein Mobilfunksystem nach dem GSM-Standard (Global System for Mobile Communications) aus der Veröffentlichung "GSM Global System for Mobile Communication" J. Eberspächer, H.J. Vögel, B. G. Teubner, Stuttgart, 1997 bekannt, über das Mobilfunknetz zu übertragende Daten in einer entsprechenden Verschlüsselungseinheit zu verschlüsseln und somit vor unberechtigtem Zugriff zu schützen. Dabei wird gemäß dem GSM-Standard der Schlüssel, mit dem die zu übertragenden Daten verschlüsselt werden, vom Mobilfunksystem und damit vom Netzbetreiber festgelegt. Die Kontrolle über diesen Schlüssel liegt somit bei dem Netzbetreiber, bei dem das Mobiltelefon gerade angemeldet ist. Die im Mobiltelefon vorhandene Verschlüsselungsfunktionalität kann somit vom Benutzer des Mobiltelefons nicht unabhängig vom Netzbetreiber benutzt werden.

Darüber hinaus ist beispielsweise aus der Veröffentlichung "Radio Interface Protocol Architecture", 3GPP TSG RAN WG2, TS25.301 v. 3.1.0, 1999 bekannt, die Verschlüsselungseinheit des Mobiltelefons zu benutzen, um einen Geräteidentifizierer des Mobiltelefons zu verschlüsseln und damit vor unberechtigtem Zugriff während seiner Übertragung zum Mobilfunknetz zu schützen. Der Geräteidentifizierer ist jedoch vom Hersteller des Mobiltelefons vorgegeben. Der Benutzer des Mobiltelefons kann somit die im Mobiltelefon vorhandene Verschlüsselungsfunktionalität auch nicht unabhängig vom Hersteller des Mobiltelefons benutzen.

Das Dokument WO /9939524 offenbart die Verschlüsselung von Nachrichten zwischen einer Mobilstation und einem Netzwerk mit einem privaten Schlüssel.

### Vorteile der Erfindung

Das erfindungsgemäße Verfahren und das erfindungsgemäße Telekommunikationsendgerät mit den Merkmalen der unabhängigen Ansprüche haben demgegenüber den Vorteil, daß die über das Telekommunikationsnetz zu übertragenden Daten in Abhängigkeit des gewählten Diensteanbieters verschlüsselt werden. Auf diese Weise wird eine vom Hersteller des Telekommunikationsendgerätes oder vom Netzbetreiber des Telekommunikationsnetzes vorgegebene Verschlüsselung überflüssig, so daß eine Verschlüsselungsfunktionalität des Telekommunikationsendgerätes unabhängig vom Netzbetreiber und nahezu unabhängig vom Hersteller des Telekommunikationsendgerätes betrieben werden kann. Bei der Verschlüsselung von zu übertragenden Daten muß man sich dann nicht mehr auf die Vergabe von Schlüsseln durch den Netzbetreiber oder den Hersteller des Telekommunikationsendgerätes verlassen. Der Schutz von zu übertragenden Daten vor unberechtigtem Zugriff liegt gemäß der Erfindung vielmehr in der Hand des Diensteanbieters und des Dienstenutzers in Form des Telekomunikationsendgerätes und nicht mehr beim Netzbetreiber oder dem Hersteller des Telekommunikationsendgerätes.

Ein weiterer Vorteil besteht darin, daß die zwischen dem Telekommunikationsendgerät und dem Diensteanbieter zu übertragenden Daten über die komplette Übertragungsstrecke verschlüsselt sind, so daß sich eine sogenannte End-zu-End-Datenverschlüsselung zwischen dem Telekommunikationsendgerät und dem Diensteanbieter ergibt. Die an den Diensteanbieter zu sendenden Daten werden dann nicht vor Erreichen des Diensteanbieters vom Netzbetreiber entschlüsselt, um nicht ungeschützt vor unberechtigtem Zugriff vollends zum Diensteanbieter übertragen zu werden.

Ein weiterer Vorteil besteht darin, daß eine Authentifizierung des Telekommunikationsendgerätes direkt beim Diensteanbieter ermöglicht wird, wenn die zu übertragenden Daten einen Geräteidentifizierer des Telekommunikationsendgerätes umfassen. Die Authentifizierung findet somit dort statt, wo auch über den Zugang des Telekommunikationsendgerätes zu Diensten des Diensteanbieters entschieden wird, nämlich beim Diensteanbieter selbst und nicht dem Diensteanbieter vorgelagert beim Netzbetreiber, der über den Zugang zu den Diensten des Diensteanbieters keine Entscheidungsbefugnis hat. Durch die Erfindung wird also die Authentifizierung des Telekommunikationsendgerätes direkt beim Diensteanbieter ermöglicht und ist daher besonders zuverlässig. Entsprechendes gilt umgekehrt für eine Authentifizierung des Diensteanbieters beim Telekommunikationsendgerät.

Aufgrund der Erfindung bekommt der Benutzer des Telekommunikationsendgerätes die Möglichkeit, gesicherte Dienste eines beliebigen Diensteanbieters zu nutzen. Er ist nicht weiter davon abhängig, den Netzbetreiber auch als Diensteanbieter zu nutzen oder vom Netzbetreiber bevorzugte Diensteanbieter zu nutzen, sondern kann ohne Wissen des Netzbetreibers und Herstellers Dienste eines beliebigen Diensteanbieters seiner Wahl in Anspruch nehmen.

Unabhängig vom Netzbetreiber und vom Hersteller des Telekommunikationsendgerätes können geheime Schlüssel vergeben werden, die eine eindeutige und sichere Identifizierung des Benutzers des Telekommunikationsendgerätes und/oder des Diensteanbieters ermöglichen. Dadurch wird eine gesicherte Authentifizierung des Benutzers des Telekommunikationsendgerätes beim Diensteanbieter und des Diensteanbieters beim Telekommunikationsendgerät ermöglicht, ohne daß der Netzbetreiber oder der Hersteller des Telekommunikationsendgerätes Einfluß darauf haben. Eine zusätzliche Verschlüsselungsfunktionalität im Telekommunikationsendgerät ist dazu nicht erforderlich.

Durch Anordnung der Verschlüsselungsfunktionalität auf einer Zugangsberechtigungskarte ergibt sich zusätzlich der Vorteil, daß die Verschlüsselungsfunktionalität nicht durch die Hardware des Telekommunikationsendgerätes festgelegt, sondern mit der Zugangsberechtigungskarte austauschbar ist. Auf diese Weise können neue und verbesserte Verschlüsselungstechniken und -algorithmen für das Telekommunikationsendgerät verfügbar gemacht werden. Mittels der Verschlüsselungsfunktionalität auf der Zugangsberechtigungskarte kann eine völlige Unabhängigkeit der Verschlüsselung von der Hardware und damit vom Gerätehersteller des Telekommunikationsendgerätes erzielt und zusätzlich die Möglichkeit der Anpassung an die sich schnell erhöhende Leistungsfähigkeit von Mikroprozessoren genutzt werden, wenn diese auf die Zugangsberechtigungskarte aufgebracht werden. Die Zugangsberechtigungskarte kann vom Diensteanbieter an einen Benutzer des Telekommunikationsendgerätes vergeben werden, ohne daß der Gerätehersteller oder der Netzwerkbetreiber involviert sind. Wenn im Laufe der Zeit die integrierten Schaltkreise und Mikroprozessoren leistungsfähiger werden, dann kann der Diensteanbieter dem Benutzer einfach eine neue Zugangsberechtigungskarte mit verbesserter Verschlüsselungsfunktionalität geben. Der Benutzer muß dann lediglich die Zugangsberechtigungskarte in seinem Telekommunikationsendgerät austauschen, um auf die verbesserte Funktionalität der neuen Zugangsberechtigungskarte zugreifen zu können.

Durch die in den Unteransprüchen aufgeführten Maßnahmen sind vorteilhafte Weiterbildungen und Verbesserungen des Verfahrens zur Verschlüsselung von Daten und des Telekommunikationsendgerätes gemäß den unabhängigen Ansprüchen möglich.

Besonders vorteilhaft ist es, daß für die Übertragung der Daten ein Dienst des gewählten Diensteanbieters genutzt wird und daß die über das Telekommunikationsnetz zu übertragenden Daten in Abhängigkeit des gewählten Dienstes verschlüsselt werden. Auf diese Weise kann auch die Übertragung von Daten mittels einzelner von einem Diensteanbieter angebotener Dienste durch jeweils einen eigenen Schlüssel besonders gesichert werden. Die Anzahl der benutzten geheimen Schlüssel und damit der sicherbaren Dienste ist dabei prinzipiell nicht begrenzt.

Ein weiterer Vorteil besteht darin, daß mit dem für die Authentifizierung des Telekommunikationsendgerätes ausgewählten Schlüssel auch die zu übertragenden Nutzdaten verschlüsselt werden. Auf diese Weise kann die Anzahl der im Telekommunikationsendgerät zu speichernden Schlüssel und damit Speicherplatz eingespart werden.

### Zeichnung

Ausführungsbeispiele der Erfindung sind in der Zeichnung dargestellt und in der nachfolgenden Beschreibung näher erläutert. Es zeigen Figur 1 ein Blockschaltbild eines erfindungsgemäßen Telekommunikationsendgerätes, Figur 2 ein Blockschaltbild einer Basisstation und eines mit der Basisstation über ein Gateway verbundenen Diensteanbieters zur Beschreibung eines Authentifizierungsvorgangs, Figur 3 ein Blockschaltbild einer Basisstation und eines mit der Basisstation über ein Gateway verbundenen Diensteanbieters für eine verschlüsselte Nutzdatenübertragung, Figur 4 ein Blockschaltbild eines Telekommunikationsendgerätes mit eingeführter erfindungsgemäßer Zugangsberechtigungskarte und Figur 5 ein Blockschaltbild einer Basisstation und eines mit der Basisstation über ein Gateway verbundenen Diensteanbieters mit einer Protokolleinheit zum Austausch von Daten mit der in das Telekommunikationsendgerät eingeführten Zugangsberechtigungskarte.

### Beschreibung der Ausführungsbeispiele

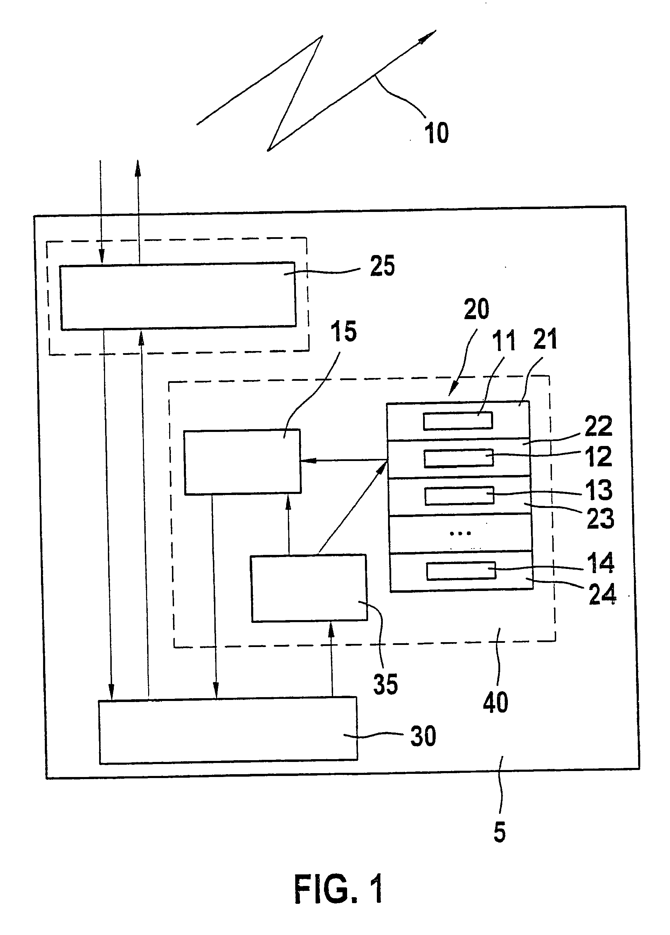

In Figur 1 kennzeichnet 5 ein Telekommunikationsendgerät, das beispielsweise schnurgebunden, schnurlos oder drahtlos ausgebildet sein kann. Bei Ausbildung als schnurgebundenes Telekommunikationsendgerät kann es sich beispielsweise um ein Telekommunikationsendgerät nach dem ISDN-Standard (Integrated Services Digital Network) handeln. Bei Ausbildung als schnurloses Telekommunikationsendgerät kann es sich beispielsweise um ein Telekommunikationsendgerät nach dem DECT-Standard (Digital European Cordless Telecommunications) handeln. Bei Ausbildung als drahtloses Telekommunikationsendgerät kann es sich beispielsweise um ein Telekommunikationsendgerät nach dem GSM-Standard (Global System for Mobile Communications) oder nach dem UMTS-Standard (Universal Mobile Telecommunications System) handeln. Im folgenden soll beispielhaft angenommen werden, daß das Telekommunikationsendgerät 5 als drahtloses Telekommunikationsendgerät in Form eines Mobiltelefons nach dem UMTS-Standard ausgebildet ist.

Das Mobiltelefon 5 umfaßt dabei eine erste Sendevorrichtung 25, die im folgenden beispielhaft als erste Sende-/Empfangsvorrichtung ausgebildet sein soll. Das Mobiltelefon 5 umfaßt weiterhin ein erstes Anwendungsmodul 30, das mit der ersten Sende-/Empfangsvorrichtung 25 verbunden ist. Das erste Anwendungsmodul 30 ist andererseits mit einem Verschlüsselungsmodul 40 verbunden, das eine erste Verschlüsselungseinheit 15 umfaßt. Dabei ist die erste Verschlüsselungseinheit 15 direkt mit dem ersten Anwendungsmodul 30 verbunden. Das Verschlüsselungsmodul 40 umfaßt weiterhin eine Adreßsteuerung 35, die ebenfalls direkt mit dem ersten Anwendungsmodul 30 verbunden ist. Das Verschlüsselungsmodul 40 umfaßt weiterhin einen Speicher 20 mit einem ersten Speicherplatz 21, einem zweiten Speicherplatz 22, einem dritten Speicherplatz 23 und einem n-ten Speicherplatz 24, wobei n allgemein ganzzahlig und größer oder gleich 1 ist. In diesem Beispiel ist n größer oder gleich 4 gewählt. Im ersten Speicherplatz 21 ist dabei ein erster Schlüssel 11 abgespeichert. Im zweiten Speicherplatz 22 ist ein zweiter Schlüssel 12 abgespeichert. Im dritten Speicherplatz 23 ist ein dritter Schlüssel 13 abgespeichert. Im n-ten Speicherplatz 24 ist ein n-ter Schlüssel 14 abgespeichert. Die Adreßsteuerung 35 ist sowohl mit dem Speicher 20 verbunden als auch mit der ersten Verschlüsselungseinheit 15. Der Speicher 20 ist außerdem mit der ersten Verschlüsselungseinheit 15 verbunden.

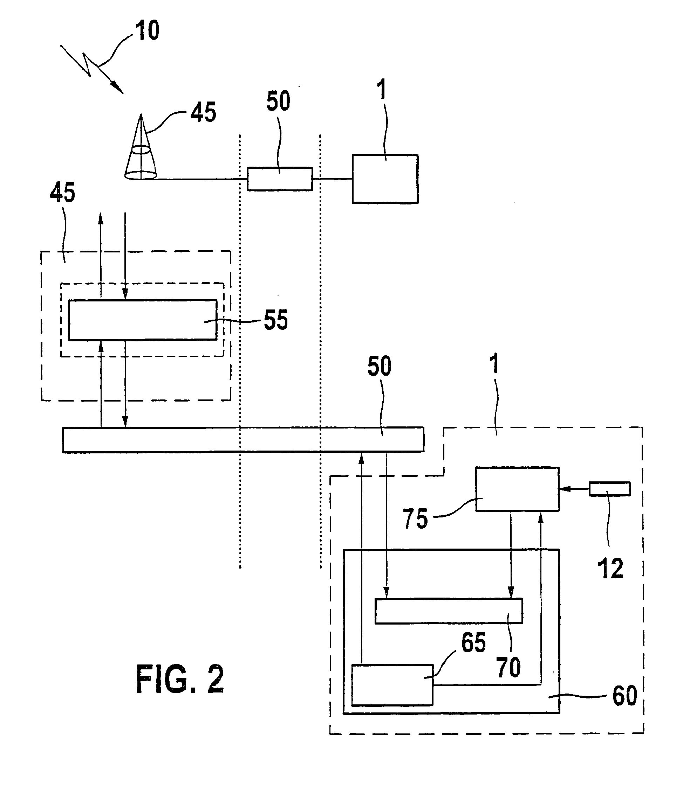

Über ein Telekommunikationsnetz 10, das in diesem Beispiel als Mobilfunknetz ausgebildet sein soll, können zwischen dem Mobiltelefon 5 und einer Basisstation 45 gemäß Figur 2 Daten ausgetauscht werden. Gemäß Figur 2 ist die Basisstation 45 über eine Verbindungseinheit 50, die im folgenden auch als Gateway bezeichnet wird, mit einem Diensteanbieter 1 verbunden. Der Diensteanbieter 1 kann dabei die verschiedensten Übertragungsdienste, wie beispielsweise Internet-E-Mail-Dienste, Videoübertragungsdienste, Faxdienste oder dergleichen zur Verfügung stellen. Die Basisstation 45 umfaßt eine zweite Sende-/Empfangsvorrichtung 55, die mit dem Gateway 50 verbunden ist. Auf der Seite des Diensteanbieters 1 ist das Gateway 50 mit einem zweiten Anwendungsmodul 60 verbunden, das dem Diensteanbieter 1 zugeordnet ist und beispielsweise vom Diensteanbieter 1 umfaßt wird, und das Mittel 65 zum Erzeugen einer Identifizierungsanforderung umfaßt. Die Mittel 65 zum Erzeugen einer Identifizierungsanforderung sind einerseits direkt mit dem Gateway 50 und andererseits direkt mit einer zweiten Verschlüsselungseinheit 75 verbunden, die ebenfalls dem Diensteanbieter 1 zugeordnet ist und beispielsweise von diesem umfaßt wird. Das zweite Anwendungsmodul 60 umfaßt weiterhin einen Vergleicher 70, der einerseits direkt mit dem Gateway 50 und andererseits direkt mit der zweiten Verschlüsselungseinheit 75 verbunden ist. Der zweiten Verschlüsselungseinheit 75 ist außerdem der zweite Schlüssel 12 zugeführt.

Zwischen der ersten Sende-/Empfangsvorrichtung 25 und der zweiten Sende-/Empfangsvorrichtung 55 kann ein Datenaustausch über das Mobilfunknetz 10 erfolgen. Im folgenden soll beispielhaft angenommen werden, daß das Mobiltelefon 5 eine Verbindung über das Mobilfunknetz 10 und das Gateway 50 zum Diensteanbieter 1 aufbauen möchte, um beispielsweise Internet-E-Mails vom Diensteanbieter 1 in das Mobiltelefon 5 herunterzuladen. Dazu besteht zwischen dem Benutzer des Mobiltelefons 5 und dem Diensteanbieter 1 in der Regel ein Vertrag. Gemäß diesem Vertrag ist nun die Benutzung des vom Diensteanbieter 1 angebotenen Internet-E-Mail-Dienstes durch einen besonderen Schlüssel gesichert, um erstens zu verhindern, daß ein unberechtigtes Telekommunikationsendgerät auf diesen Dienst beim Diensteanbieter 1 zugreift und zweitens zu verhindern, daß unbefugt auf Daten zugegriffen wird, die im Rahmen des Internet-E-Mail-Dienstes zwischen dem Mobiltelefon 5 und dem Diensteanbieter 1 übertragen werden. Im folgenden soll beispielhaft angenommen werden, daß der dem Internet-E-Mail-Dienst des Diensteanbieters 1 auf diese Weise zugeordnete Schlüssel der zweite Schlüssel 12 sei. Wird der Verbindungsaufbau zum Diensteanbieter 1 vom Mobiltelefon 5 eingeleitet, so kann dies dadurch geschehen, daß der Benutzer des Mobiltelefons 5 die Rufnummer des Diensteanbieters 1 anwählt. Mittels der Rufnummer kann er dabei auch bereits einen Dienst des Diensteanbieters 1 an bzw. auswählen. Für den Zugriff auf den Internet-E-Mail-Dienst des Diensteanbieters 1 ist zunächst eine Authentifizierung des Mobiltelefons 5 beim Diensteanbieter 1 erforderlich. Dazu erzeugen die Mittel 65 eine Identifizierungsanforderung. Die Identifizierungsanforderung wird einerseits in der zweiten Verschlüsselungseinheit 75 mittels des zweiten Schlüssels 12 verschlüsselt. Auf diese Weise wird eine verschlüsselte Referenzantwort gebildet, die dem Vergleicher 70 zugeführt wird. Andererseits wird die Identifizierungsanforderung von den Mitteln 65 dem Gateway 50 zugeführt, von wo sie an die zweite Sende-/Empfangsvorrichtung 55 der Basisstation 45 zur Abstrahlung über das Mobilfunknetz 10 an das Mobiltelefon 5 abgegeben wird. Die Identifizierungsanforderung wird dann in der ersten Sende-/Empfangsvorrichtung 25 empfangen und von dort an das erste Anwendungsmodul 30 weitergeleitet. Das erste Anwendungsmodul 30 detektiert aus dem insgesamt über die erste Sende-/Empfangsvorrichtung 25 aus dem Mobilfunknetz 10 empfangenen Datenstrom die Identifizierungsanforderung. Dabei ist es im ersten Anwendungsmodul 30 bekannt, unter welcher Adresse im Speicher 20 bzw. in welchem Speicherplatz des Speichers 20 der dem Internet-E-Mail-Dienst des Diensteanbieters 1 zugeordnete zweite Schlüssel 12 abgelegt ist. Insbesondere für den Fall, daß der Verbindungsaufbau nicht vom Mobiltelefon 5 sondern vom Diensteanbieter 1 ausgeht, kann es vorgesehen sein, daß der Identifizierungsanforderung eine Kennung des Diensteanbieters und des vom Diensteanbieter angebotenen Dienstes umfaßt. Das erste Anwendungsmodul 30 übermittelt dann die detektierte Identifizierungsanforderung zusammen mit dieser Kennung des Diensteanbieters und des vom Diensteanbieter angebotenen Dienstes an die Adreßsteuerung 35. Anhand der Kennung kann die Adreßsteuerung 35 den initiierenden Diensteanbieter und den von ihm gewählten Dienst detektieren und den diesem Diensteanbieter und Dienst zugeordneten Schlüssel im Speicher 20 adressieren. Die Adreßsteuerung 35 leitet daraufhin die Identifizierungsanforderung an die erste Verschlüsselungseinheit 15 weiter und adressiert den Speicher 20 gemäß der ausgewerteten Kennung. In dem hier beschriebenen Beispiel wird dabei der zweite Speicherplatz 22 mit dem zweiten Schlüssel 12 adressiert, der dem vom Diensteanbieter 1 angebotenen Internet-E-Mail-Dienst zugeordnet ist. Der zweite Schlüssel 12 wird daraufhin ebenfalls zur ersten Verschlüsselungseinheit 15 übertragen, die die Identifizierungsanforderung dann mit dem zweiten Schlüssel 12 verschlüsselt und auf diese Weise eine verschlüsselte Antwort bildet. Die verschlüsselte Antwort wird von der ersten Verschlüsselungseinheit 15 an das erste Anwendungsmodul 30 übertragen und von dort an die erste Sende-/Empfangsvorrichtung 25 zur Abstrahlung über das Mobilfunknetz 10 an die Basisstation 45 abgegeben. Die verschlüsselte Antwort wird so in der zweiten Sende-/Empfangsvorrichtung 55 empfangen und von dort über das Gateway 50 an den Vergleicher 70 weitergeleitet. Im Vergleicher 70 wird die vom Mobiltelefon 5 empfangene verschlüsselte Antwort mit der in der zweiten Verschlüsselungseinheit 75 gebildeten verschlüsselten Referenzantwort verglichen. Da in der ersten Verschlüsselungseinheit 15 und in der zweiten Verschlüsselungseinheit 75 der gleiche Verschlüsselungsalgorithmus zur Anwendung kommt, führt die gleiche Identifizierungsanforderung bei Verschlüsselung mit dem gleichen Schlüssel auch zur gleichen verschlüsselten Antwort. Stimmt also die vom Mobiltelefon 5 empfangene verschlüsselte Antwort mit der verschlüsselten Referenzantwort im Vergleicher 70 überein, so ist das Mobiltelefon 5 erfolgreich beim Diensteanbieter 1 authentifiziert und für den Internet-E-Mail-Dienst zugangsberechtigt. Andernfalls ist die Authentifizierung gescheitert und der Zugang zum Internet-E-Mail-Dienst wird dem Mobiltelefon 5 verwehrt.

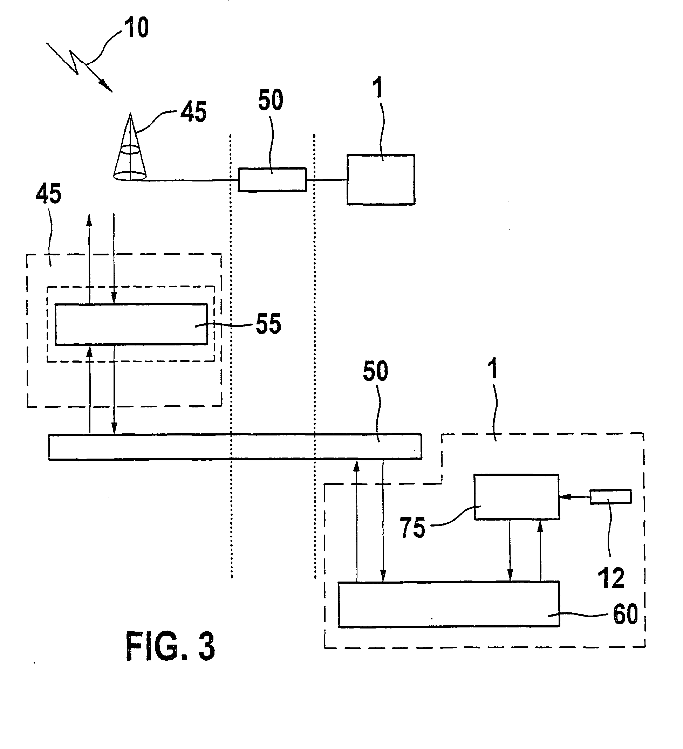

Nach erfolgreicher Authentifizierung des Mobiltelefons 5 beim Diensteanbieter 1 kann der Nutzdatenaustausch zwischen dem Mobiltelefon 5 und dem Diensteanbieter 1 erfolgen, um beispielsweise mittels des Internet-E-Mail-Dienstes für das Mobiltelefon 5 beim Diensteanbieter 1 vorliegende Internet-E-Mails vom Diensteanbieter 1 ins Mobiltelefon 5 herunterzuladen. Für den Nutzdatenaustausch des Internet-E-Mail-Dienstes zwischen dem Mobiltelefon 5 und dem Diensteanbieter 1 kann dabei ein Nutzdatenschlüssel vereinbart sein, mit dem die zwischen dem Mobiltelefon 5 und dem Diensteanbieter 1 im Rahmen des Internet-E-Mail-Dienstes zu versendenden Nutzdaten, insbesondere der zu ladenden Internet-E-Mails selbst, verschlüsselt werden sollen, um sie vor ungewolltem Zugriff während der Übertragung zu sichern. Der Nutzdatenschlüssel kann sich dabei von dem für die Authentifizierung benötigten Schlüssel unterscheiden. Er kann jedoch aus Gründen der Einsparung von Speicherkapazität auch mit dem für die Authentifizierung verwendeten Schlüssel übereinstimmen. Im folgenden soll daher beispielhaft angenommen werden, daß der für den Internet-E-Mail-Dienst des Diensteanbieters 1 vorgesehene Nutzdatenschlüssel dem zweiten Schlüssel 12 entspricht. Die im Rahmen des Internet-E-Mail-Dienstes von dem Mobiltelefon 5 zum Diensteanbieter 1 zu versendenden Nutzdaten werden dann vor ihrer Übertragung mit dem zweiten Schlüssel 12 in der gleichen Weise verschlüsselt, wie die Identifizierungsanforderung für den Authentifizierungsvorgang. Dabei liefert das erste Anwendungsmodul 30 statt der Identifizierungsanforderung die an den Diensteanbieter 1 zu versendenden Nutzdaten über die Adreßsteuerung 35 an die erste Verschlüsselungseinheit 15, wo sie in der beschriebenen Weise mit dem zweiten Schlüssel 12 verschlüsselt werden. Die so verschlüsselten Nutzdaten werden dann in der beschriebenen Weise über das erste Anwendungsmodul 30, die erste Sende-/Empfangsvorrichtung 25, das Mobilfunknetz 10, die Basisstation 45 und das Gateway 50 an den Diensteanbieter 1 übertragen. Gemäß Figur 3 ist ein Blockschaltbild für die Basisstation 45, das Gateway 50 und den Diensteanbieter 1 dargestellt, bei dem gleiche Bezugszeichen gleiche Elemente wie in Figur 2 kennzeichnen und das sich gegenüber dem Blockschaltbild von Figur 2 nur dadurch unterscheidet, daß das zweite Anwendungsmodul 60 ganz allgemein und ohne weitere Bestandteile dargestellt ist. Die für die Authentifizierung benötigten Mittel 65 zum erzeugen der Identifizierungsanforderung und der Vergleicher 70 sind für die Phase des Nutzdatenaustausches zwischen dem Mobiltelefon 5 und dem Diensteanbieter 1 nicht mehr erforderlich, aber natürlich nach wie vor vorhanden. Das zweite Anwendungsmodul 60 hat nunmehr jedoch die Aufgabe, die vom Mobiltelefon 5 empfangenen Nutzdaten zu entschlüsseln und die vom Mobiltelefon 5 gewünschten Internet-E-Mails einer Verschlüsselung durch den zweiten Schlüssel 12 in der zweiten Verschlüsselungseinheit 75 zuzuführen und die so verschlüsselten Internet-E-Mails über das Gateway 50 an die zweite Sende-/Empfangsvorrichtung 55 zur Abstrahlung über das Mobilfunknetz 10 an das Mobiltelefon 5 abzugeben. Diese Internet-E-Mails werden dann in der ersten Sende-/Empfangsvorrichtung 25 empfangen und an das erste Anwendungsmodul 30 zur Entschlüsselung weitergeleitet. Die auf diese Weise übertragenen Internet-E-Mails stellen ebenfalls entsprechende Nutzdaten dar. Die Entschlüsselung der zwischen dem Mobiltelefon 5 und dem Diensteanbieter 1 übertragenen Nutzdaten erfolgt entsprechend nach Empfang im jeweiligen Anwendungsmodul 30, 60 mittels eines dem Verschlüsselungsalgorithmus der ersten Verschlüsselungseinheit 15 und der zweiten Verschlüsselungseinheit 75 zugeordneten Entschlüsselungsalgorithmus, der die mit dem Verschlüsselungsalgorithmus bewirkte Verschlüsselung der Daten rückgängig macht und dazu ebenfalls den zweiten Schlüssel 12 in entsprechender Weise verwendet.

Die Erfindung wurde beispielhaft anhand des vom Mobiltelefon 5 gewählten Diensteanbieters 1 und des ebenfalls vom Mobiltelefon 5 gewählten Internet-E-Mail-Dienstes des Diensteanbieters 1 beschrieben. Dieser Kombination aus gewähltem Diensteanbieter 1 und gewähltem Internet-E-Mail-Dienst ist dabei der zweite Schlüssel 12 beispielhaft zugeordnet. In entsprechender Weise kann es vorgesehen sein, daß das Mobiltelefon 5 auch auf andere Dienste des Diensteanbieters 1, wie beispielsweise Videoübertragungsdienst oder Faxdienst zugreifen kann, denen dann jeweils wiederum ein entsprechender Schlüssel zugeordnet ist, beispielsweise der erste Schlüssel 11 oder der dritte Schlüssel 13. Als Nutzdaten würden in diesem Fall zwischen dem Mobiltelefon 5 und dem Diensteanbieter 1 dann unter anderem Videodaten oder Faxdaten übertragen werden. Es kann weiterhin auch vorgesehen sein, daß das Mobiltelefon 5 auch einen vom Diensteanbieter 1 verschiedenen Diensteanbieter oder mehrere Diensteanbieter wählen kann, um verschiedene Dienste zu nutzen. Jeder Kombination aus gewähltem Diensteanbieter und von dem gewählten Diensteanbieter genutzten Dienst kann dabei ein Schlüssel in der beschriebenen Weise zur Authentifizierung und/oder zum gesicherten Austausch von Nutzdaten zugeordnet sein. Es kann aber auch vorgesehen sein, daß einer oder mehrere der im Speicher 20 gespeicherten Schlüssel nur jeweils einem Diensteanbieter zugeordnet sind, ohne daß den einzelnen von diesen Diensteanbietern angebotenen Diensten ein eigener Schlüssel zugewiesen ist. Somit lassen sich sämtliche Dienste eines solchen Diensteanbieters durch den diesem Diensteanbieter zugewiesenen oder zugeordneten Schlüssel nutzen, so daß für den Zugriff auf die verschiedenen Dienste eines solchen Diensteanbieters nicht jeweils eine eigene Nutzerberechtigung erforderlich ist und eine erfolgreiche Authentifizierung bei einem solchen Diensteanbieter alle von diesem Diensteanbieter angebotenen Dienste für das Mobiltelefon 5 nutzbar macht. Dabei kann es dann auch vorgesehen sein, daß die für die verschiedenen Dienste dieses Diensteanbieters zwischen dem Mobiltelefon 5 und diesem Diensteanbieter zu übertragenden Nutzdaten unabhängig vom verwendeten Dienst mit dem gleichen Nutzdatenschlüssel verschlüsselt werden, wobei es sich bei diesem Nutzdatenschlüssel beispielsweise um den gleichen Schlüssel handeln kann wie den für die Authentifizierung verwendeten.

Beim Speicher 20 kann es sich beispielsweise um einen nichtflüchtigen Flash/EEPROM-Speicher handeln, dessen Inhalte auch bei Spannungsausfall nicht verlorengehen können.

In Abwandlung des bezüglich Figur 1 beschriebenen Ausführungsbeispiels kann es auch vorgesehen sein, daß der erforderliche Schlüssel, im Beispiel der zweite Schlüssel 12, vom ersten Anwendungsmodul 30 zusammen mit der Identifizierungsanforderung der ersten Verschlüsselungseinheit 15 zur Verschlüsselung der Identifizierungsanforderung über die Adreßsteuerung 35 übergeben wird. Die erste Verschlüsselungseinheit 15 erzeugt dann in der beschriebenen Weise die verschlüsselte Antwort und liefert sie zurück an das Anwendungsmodul 30. Werden die Schlüssel jedoch, wie in Figur 1 dargestellt, im Speicher 20 gespeichert, der zusammen mit der ersten Verschlüsselungseinheit 15 im Verschlüsselungsmodul 40 integriert ist, so können die Schlüssel besser vor unerlaubtem Zugriff gesichert werden, vorausgesetzt das Verschlüsselungsmodul 40 ist vor unerlaubtem Zugriff gesichert.

Die Adreßsteuerung 35 stellt eine Schnittstelle zwischen dem ersten Anwendungsmodul 30 und dem Verschlüsselungsmodul 40 dar. Dabei kann es in Abwandlung des in Figur 1 dargestellten Ausführungsbeispiels auch optional vorgesehen sein, daß die von der ersten Verschlüsselungseinheit 15 verschlüsselten Daten, wie die verschlüsselte Identifizierungsanforderung oder die verschlüsselten Nutzdaten über die Adreßsteuerung 35 zum ersten Anwendungsmodul 30 übertragen werden, um von dort über die erste Sende-/Empfangsvorrichtung 25, das Mobilfunknetz 10, die Basisstation 45 und das Gateway 50 zum Diensteanbieter 1 übertragen zu werden. Beim UMTS-Mobilfunknetz erfolgt die Übertragung der Daten zwischen dem Mobiltelefon 5 und der Basisstation 45 über sogenannte UMTS-Träger.

Bei entsprechender Kapazität des Speichers 20 läßt sich eine nahezu unbegrenzte Zahl von Schlüsseln dort abspeichern, mit denen jeweils ein beliebiger Dienst eines beliebigen Diensteanbieters in der beschriebenen Weise genutzt werden kann, ohne daß der beispielsweise für einen ersten Dienst gewählte erste Diensteanbieter von der Wahl eines zweiten Diensteanbieters für einen zweiten Dienst Kenntnis hat.

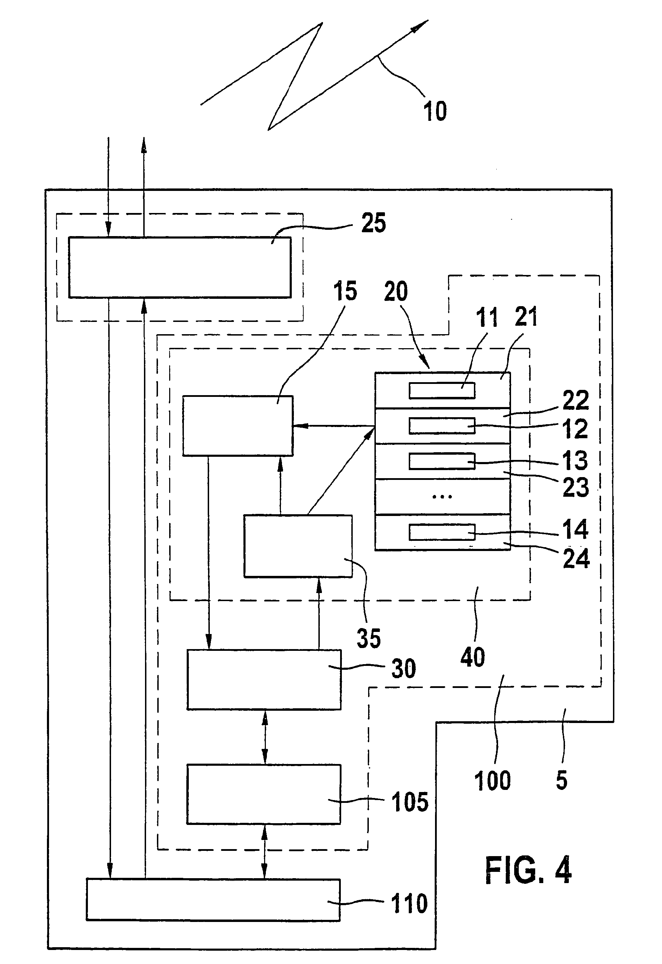

In Figur 4 ist als ein weiteres Ausführungsbeispiel eine alternativen Ausführungsform des Telekommunikationsendgerätes 5 dargestellt, wobei gleiche Bezugszeichen gleiche Elemente wie in den Figuren 1 bis 3 kennzeichnen. Dabei ist in das Telekommunikationsendgerät 5 über einen in Figur 4 nicht dargestellten Eingabeschacht eine Zugangsberechtigungskarte 100 eingeführt. Das Verschlüsselungsmodul 40 und das erste Anwendungsmodul 30 sind bei dem Ausführungsbeispiel nach Figur 4 nun nicht mehr Bestandteile des Telekommunikationsendgerätes selbst, sondern sind auf der Zugangsberechtigungskarte 100 angeordnet. Die Zugangsberechtigungskarte 100 umfaßt weiterhin eine erste Schnittstelleneinheit 105, die an das erste Anwendungsmodul 30 angeschlossen und zur Verbindung mit einer zweiten Schnittstelleneinheit 110 des Telekommunikationsendgerätes 5 vorgesehen ist. An die zweite Schnittstelleneinheit 110 ist dann die erste Sende-/Empfangsvorrichtung 25 angeschlossen.

Die Funktion des in Figur 4 dargestellten Telekommunikationsendgerätes 5 mit der eingeführten Zugangsberechtigungskarte entspricht der Funktion des Telekommunikationsendgerätes nach Figur 1 mit dem Unterschied, daß beim Telekommunikationsendgerät 5 nach Figur 4 zwischen die erste Sende-/Empfangsvorrichtung 25 und das erste Anwendungsmodul 30 eine aus der ersten Schnittstelleneinheit 105 und der zweiten Schnittstelleneinheit 110 gebildete Schnittstellenschaltung angeordnet ist, die einen bidirektionalen Datenaustausch zwischen dem Telekommunikationsendgerät 5 und der Zugangsberechtigungskarte 100 sicherstellt.

Dabei soll im folgenden beispielhaft angenommen werden, daß die Zugangsberechtigungskarte 100 als SIM-Karte (Subscriber Identity Module), beispielsweise in Form einer Smart Card ausgebildet ist und ein gemeinsames Protokoll, im folgenden beispielhaft das SAT-Protokoll (SIM Application Toolkit), für eine bidirektionale Übertragung zwischen der Zugangsberechtigungskarte 100 und dem Diensteanbieter 1 eingesetzt wird. Smart Cards umfassen einen kleinen Chip mit integriertem Mikroprozessor und einer Schnittstelle zum Datenaustausch und werden beispielsweise von Banken auf sogenannten Geldkarten verwendet. Das SAT-Protokoll ist beispielsweise aus der Veröffentlichung "Specification of SIM Application Toolkit for the Subscriber Identity Module - Mobile Equipment (SIM-ME) interface", GSM 11.14 version 8.0.1 Release 1999, ETSI bekannt.

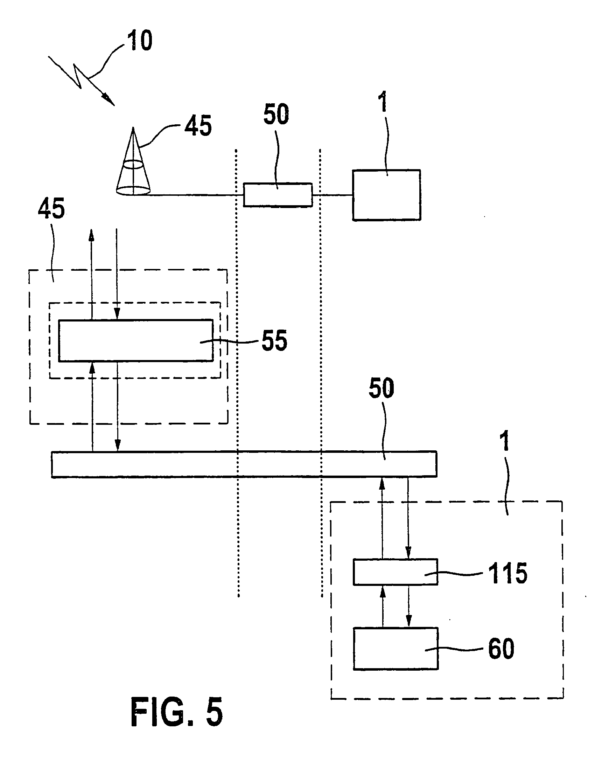

In diesem Fall ist gemäß Figur 5 auch beim Diensteanbieter 1 eine Schnittstellenschaltung in Form einer dritten Schnittstelleneinheit 115 vorgesehen, die zwischen das zweite Anwendungsmodul 60 und das Gateway 50 geschaltet ist und in diesem Beispiel ebenfalls nach dem SAT-Protokoll realisiert sein soll. Weitere Module des Diensteanbieters 1, wie sie beispielsweise in den Figuren 2 und 3 dargestellt sind, sind in Figur 5 der Übersichtlichkeit halber nicht dargestellt.

Ein Benutzer, der einen Dienst des Diensteanbieters 1 in Anspruch nehmen möchte, erhält von diesem die Zugangsberechtigungskarte 100, auf der der Diensteanbieter 1 einen oder mehrere der geheimen Schlüssel 11, 12, 13, 14 im Speicher 20 speichert. Dieser oder diese Schlüssel können dann während der Laufzeit des Vertrags zwischen dem Benutzer und dem Diensteanbieter 1 als sicheres Mittel zur gegenseitigen Identifikation der beiden Vertragspartner dienen.

Das Telekommunikationsendgerät 5 soll beispielhaft als UMTS-Mobilfunkgerät ausgebildet sein. Will der Benutzer einen Dienst des Diensteanbieters 1 nutzen, so beantragt er diesen Dienst über das in diesem Beispiel als UMTS-Mobilfunknetz ausgebildeten Telekommunikationsnetz 10, indem er zum Beispiel die Rufnummer des Diensteanbieters 1 wählt. Daraufhin generiert der Diensteanbieter 1 wie beschrieben die Identifizierungsanforderung und versendet sie über das UMTS-Mobilfunknetz 10 zum UMTS-Mobilfunkgerät 5. Gleichzeitig generiert der Diensteanbieter 1 wie beschrieben die verschlüsselte Referenzantwort. Der gesamte Ablauf entspricht dem bereits für die Figuren 1 bis 3 beschriebenen mit dem Unterschied, daß der Diensteanbieter 1 die Identifizierungsanforderung über die dritte Schnittstelleneinheit 115 mittels des SAT-Protokolls an das UMTS-Mobilfunkgerät 5 versendet. Dabei wird die Identifizierungsanforderung in der dritten Schnittstelleneinheit 115 mit Hilfe des SAT-Protokolls eingepackt, wobei mit der Identifizierungsanforderung eine Signalisierungsinformation, welche beispielsweise als Kopfinformation ausgeführt ist, mitgesendet wird, die der ersten Sende-/Empfangsvorrichtung 25 des UMTS-Mobilfunkgeräts 5 bei Empfang anzeigt, daß die empfangenen Daten mit der Identifizierungsanforderung an die zweite Schnittstelleneinheit 110 im UMTS-Mobilfunkgerät 5 weitergeleitet werden müssen. Von der zweiten Schnittstelleneinheit 110 werden die Daten mit der Identifizierungsanforderung dann über die erste Schnittstelleneinheit 105 an das erste Anwendungsmodul 30 in der Zugangsberechtigungskarte 100 übertragen. Das erste Anwendungsmodul extrahiert dann aus den von der ersten Schnittstelleneinheit 105 empfangenen Daten in der beschriebenen Weise die Identifizierungsanforderung gegebenenfalls mit der Adresse eines Speicherplatzes für den vereinbarten Schlüssel im Speicher 20. In der bereits beschriebenen Weise bildet das Verschlüsselungsmodul 40 dann die verschlüsselte Antwort, die über das erste Anwendungsmodul 30 an die erste Schnittstelleneinheit 105 übertragen wird. Dort wird die verschlüsselte Antwort wieder mittels des SAT-Protokolls eingepackt und an die zweite Schnittstelleneinheit 110 weitergeleitet, von wo sie über die erste Sende-/Empfangsvorrichtung 25 mittels eines UMTS-Trägers über das UMTS-Mobilfunknetz 10 an den Diensteanbieter 1 zurückgesendet wird.

In der dritten Schnittstelleneinheit 115 wird die empfangene verschlusselte Antwort wieder gemäß dem SAT-Protokoll ausgepackt und in der beschriebenen Weise mit der verschlüsselten Referenzantwort zum Zwecke der Authentifizierung verglichen.

Wenn es erwünscht ist, nicht nur vor Beginn einer Nutzdatenübertragung eine Authentifizierung wie beschrieben durchzuführen, sondern zusätzlich die gesamte Nutzdatenübertragung gegen unbefugten Zugriff wie zum Beispiel Mithorchen zu schützen, so kann erfindungsgemäß auch eine End-zu-End Nutzdatenverschlüsselung wie beschrieben zwischen dem Diensteanbieter 1 und der Zugangsberechtigungskarte 100 des UMTS-Mobilfunkgerätes 5 durchgeführt werden. Diese End-zu-End Nutzdatenverschlüsselung kann dabei ebenfalls in der beschriebenen Weise auf dem SAT-Protokoll unter Verwendung der ersten Schnittstelleneinheit 105 und der zweiten Schnittstelleneinheit 110 aufbauen. Somit ist auch die von der Zugangsberechtigungskarte 100 durchgeführte Nutzdatenverschlüsselung völlig unabhängig vom Netzbetreiber, vom Hersteller des UMTS-Mobilfunkgeräts 5 und von den Verschlüsselungsfähigkeiten des UMTS-Mobilfunkgeräts 5 selbst.

Wie bei der Authentifizierung kann der Benutzer mit dem Erwerb der Zugangsberechtigungskarte 100 mit dem Diensteanbieter 1 einen geheimen Schlüssel vereinbaren, der dem für die Authentifizierung entsprechen kann aber nicht entsprechen muß.Dieser Schlüssel kann sogar von Dienst zu Dienst variieren, da ja der Speicher 20 mehrere Speicherplätze 21, 22, 23, 24 für geheime Schlüssel zur Verfügung stellt.

Das bedeutet, daß für verschiedene Dienste, von denen die beschriebene Authentifizierung nur einer ist, verschiedene geheime Schlüssel zwischen dem Benutzer und dem Diensteanbieter 1 vereinbart werden können.

Der Vorteil bei der Verwendung des SAT-Protokolls besteht darin, daß dieses Protokoll standardisiert ist und bereits in vielen, insbesondere nach dem GSM-Standard ausgebildeten Mobilfunkgeräten, implementiert und somit verfügbar ist. Das SAT-Protokoll bietet die Möglichkeit, auf eine herstellerunabhängige Schnittstelle zwischen dem jeweiligen Mobilfunkgerät und der Zugangsberechtigungskarte 100 zurückzugreifen, womit dem Diensteanbieter 1 die Realisierung neuer Anwendungen ermöglicht wird, um so die Verbreitung dieser Anwendungen und die Differenzierung von Diensteanbietern gegenüber dem Netzwerkbetreiber und/oder gegenüber anderen Diensteanbietern zu fördern.

## Patentansprüche

1. Verfahren zur Verschlüsselung von Daten, wobei die verschlüsselten Daten zwischen einem Diensteanbieter (1) und einem Telekommunikationsendgerät (5) über ein Telekommunikationsnetz (10) übertragen werden, wobei die über das Telekommunikationsnetz (10) zu übertragenden Daten in Abhängigkeit des gewählten Diensteanbieters (1) verschlüsselt werden, **dadurch gekennzeichnet, dass** vor einer Übertragung von Nutzdaten zwischen dem Telekommunikationsendgerät (5) und dem Diensteanbieter (1) eine Identifizierungsanforderung vom Diensteanbieter (1) an das Telekommunikationsendgerät (5) versendet wird, dass aus einer Menge von im Telekommunikationsendgerät (5) oder in einer in das Telekommunikationsendgerät (5) eingeführten Zugangsberechtigungskarte (100) gespeicherten Schlüsseln (11, 12, 13, 14) derjenige ausgewählt wird, der dem gewählten Diensteanbieter (1) zugeordnet ist, dass die Identifizierungsanforderung mit dem ausgewählten Schlüssel (11, 12, 13, 14) verschlüsselt wird, so dass sich eine verschlüsselte Antwort ergibt, und dass die Antwort vom Telekommunikationsendgerät (5) zum Diensteanbieter (1) für eine Authentifizierung des Telekommunikationsendgerätes (5) übertragen wird.

2. Verfahren nach Anspruch 1, **dadurch gekennzeichnet, dass** für die Übertragung der Daten ein Dienst des gewählten Diensteanbieters (1) genutzt wird und dass die über das Telekommunikationsnetz (10) zu übertragenden Daten in Abhängigkeit des gewählten Dienstes verschlüsselt werden.

3. Verfahren nach Anspruch 2, **dadurch gekennzeichnet, dass** aus der Menge der im Telekommunikationsendgerät (5) oder in der in das Telekommunikationsendgerät (5) eingeführten Zugangsberechtigungskarte (100) gespeicherten Schlüssel (11, 12, 13, 14) derjenige ausgewählt wird, der dem gewählten Diensteanbieter (1) und zusätzlich dem gewählten Dienst zugeordnet ist.

4. Verfahren nach einem der vorherigen Ansprüche, **dadurch gekennzeichnet, dass** dem gewählten Diensteanbieter (1) ein Nutzdatenschlüssel (11, 12, 13, 14) zugeordnet ist, mit dem die zu übertragenden Nutzdaten verschlüsselt werden.

5. Verfahren nach Anspruch 4, **dadurch gekennzeichnet, dass** dem gewählten Diensteanbieter (1) und zusätzlich dem gewählten Dienst der Nutzdatenschlüssel (11, 12, 13, 14) zugeordnet ist, mit dem die zu übertragenden Nutzdaten verschlüsselt werden.

6. Verfahren nach einem der vorherigen Ansprüche, **dadurch gekennzeichnet, dass** mit dem für die Authentifizierung des Telekommunikationsendgerätes (5) ausgewählten Schlüssel (11, 12, 13, 14) auch die zu übertragenden Nutzdaten verschlüsselt werden.

7. Telekommunikationsendgerät (5) zur Durchführung eines Verfahrens nach einem der vorherigen Ansprüche mit einer dem Telekommunikationsendgerät (5) zugeordneten Verschlüsselungseinheit (15), **dadurch gekennzeichnet, dass** ein dem Telekommunikationsendgerät (5) zugeordneter Speicher (20) vorgesehen ist, in dem mehrere jeweils einem Diensteanbieter (1) zugeordnete Schlüssel (11, 12, 13, 14) gespeichert sind, mit denen zu dem jeweiligen Diensteanbieter (1) über ein Telekommunikationsnetz (10) zu übertragende Daten in der Verschlüsselungseinheit (15) verschlüsselt werden, dass die Verschlüsselungseinheit (15) eine von einem gewählten Diensteanbieter (1) empfangene Identifizierungsanforderung mit einem im Speicher (20) abgelegten Schlüssel (11, 12, 13, 14) verschlüsselt, so dass sich eine verschlüsselte Antwort ergibt, wobei der aus dem Speicher (20) zur Verschlüsselung ausgewählte Schlüssel (11, 12, 13, 14) dem gewählten Diensteanbieter (1) zugeordnet ist, und dass eine Sendevorrichtung (25) vorgesehen ist, die die verschlüsselte Antwort an den Diensteanbieter (1) für eine Authentifizierung des Telekommunikationsendgerätes (5) versendet.

8. Telekommunikationsendgerät (5) nach Anspruch 7, **dadurch gekennzeichnet, dass** der mindestens eine in dem Speicher (20) gespeicherte Schlüssel (11, 12, 13, 14) zusätzlich einem Dienst zugeordnet ist, mit dem die Daten zwischen dem Telekommunikationsendgerät (5) und dem Diensteanbieter (1) übertragen werden.

9. Telekommunikationsendgerät (5) nach Anspruch 7 oder 8,
**dadurch gekennzeichnet, dass** die Verschlüsselungseinheit (15) die Identifizierungsanforderung mit einem Schlüssel (11, 12, 13, 14) aus dem Speicher (20) verschlüsselt, wobei aus der Menge der im Telekommunikationsendgerät (5) gespeicherten Schlüssel (11, 12, 13, 14) derjenige ausgewählt wird, der dem gewählten Diensteanbieter (1) und zusätzlich einem gewählten Dienst für die Datenübertragung zugeordnet ist.

10. Telekommunikationsendgerät (5) nach einem der Ansprüche 7 bis 9, **dadurch gekennzeichnet, dass** dem gewählten Diensteanbieter (1) ein im Speicher (20) abgelegter Nutzdatenschlüssel (11, 12, 13, 14) zugeordnet ist, mit dem die Verschlüsselungseinheit (15) die zu übertragenden Nutzdaten verschlüsselt.

11. Telekommunikationsendgerät (5) nach Anspruch 10, **dadurch gekennzeichnet, dass** dem gewählten Diensteanbieter (1) und zusätzlich dem gewählten Dienst der Nutzdatenschlüssel (11, 12, 13, 14) zugeordnet ist, mit dem die Verschlüsselungseinheit (15) die zu übertragenden Nutzdaten verschlüsselt.

12. Telekommunikationsendgerät (5) nach einem der Ansprüche 7 bis 11, **dadurch gekennzeichnet, dass** die Verschlüsselungseinheit (15) mit dem für die Authentifizierung des Telekommunikationsendgerätes (5) ausgewählten Schlüssel (11, 12, 13, 14) auch die zu übertragenden Nutzdaten verschlüsselt.

13. Telekommunikationsendgerät (5) nach einem der Ansprüche 7 bis 12, **dadurch gekennzeichnet, dass** die Verschlüsselungseinheit (15) und der Speicher (20) im Telekommunikationsendgerät (5) angeordnet sind.

14. Telekommunikationsendgerät (5) nach einem der Ansprüche 7 bis 12, **dadurch gekennzeichnet, dass** das Telekommunikationsendgerät (5) einen Eingabeschacht zur Einführung einer Zugangsberechtigungskarte (100) umfasst, wobei die Zugangsberechtigungskarte (100) die Verschlüsselungseinheit (15) und den Speicher (20) umfasst, und dass das Telekommunikationsendgerät (5) eine Schnittstelleneinheit (110) zum Austausch verschlüsselter Daten mit der Zugangsberechtigungskarte (100) umfasst.

15. Zugangsberechtigungskarte (100) zur Durchführung eines Verfahrens nach einem der Ansprüche 1 bis 6 mit einer Verschlüsselungseinheit (15), **dadurch gekennzeichnet, dass** ein Speicher (20) vorgesehen ist, in dem mehrere jeweils einem Diensteanbieter (1) zugeordnete Schlüssel (11, 12, 13, 14) gespeichert sind, mit denen zu dem jeweiligen Diensteanbieter (1) über ein Telekommunikationsnetz (10) zu übertragende Daten in der Verschlüsselungseinheit (15) verschlüsselt werden, dass eine Schnittstelleneinheit (105) zum Austausch verschlüsselter Daten mit einem Telekommunikationsendgerät (5) vorgesehen ist, dass die Verschlüsselungseinheit (15) eine von einem gewählten Diensteanbieter (1) empfangene Identifizierungsanforderung mit einem im Speicher (20) abgelegten Schlüssel (11, 12, 13, 14) verschlüsselt, so dass sich eine verschlüsselte Antwort ergibt, wobei der aus dem Speicher (20) zur Verschlüsselung ausgewählte Schlüssel (11, 12, 13, 14) dem gewählten Diensteanbieter (1) zugeordnet ist, und dass ein Versenden der verschlüsselten Antwort an den Diensteanbieter (1) für eine Authentifizierung des Telekommunikationsendgerätes (5) über eine Sendevorrichtung (25) des Telekommunikationsendgerätes (5) erfolgt.

16. Zugangsberechtigungskarte (100) nach Anspruch 15, **dadurch gekennzeichnet, dass** der mindestens eine in dem Speicher (20) gespeicherte Schlüssel (11, 12, 13, 14) zusätzlich einem Dienst zugeordnet ist, mit dem die Daten zwischen dem Telekommunikationsendgerät (5) und dem Diensteanbieter (1) übertragen werden.

17. Zugangsberechtigungskarte (100) nach Anspruch 15 oder 16, **dadurch gekennzeichnet, dass** die Verschlüsselungseinheit (15) die Identifizierungsanforderung mit einem Schlüssel (11, 12, 13, 14) aus dem Speicher (20) verschlüsselt, wobei aus der Menge der im Speicher (20) gespeicherten Schlüssel (11, 12, 13, 14) derjenige ausgewählt wird, der dem gewählten Diensteanbieter (1) und zusätzlich einem gewählten Dienst für die Datenübertragung zugeordnet ist.

18. Zugangsberechtigungskarte (100) nach einem der Ansprüche 15 bis 17, **dadurch gekennzeichnet, dass** dem gewählten Diensteanbieter (1) ein im Speicher (20) abgelegter Nutzdatenschlüssel (11, 12, 13, 14) zugeordnet ist, mit dem die Verschlüsselungseinheit (15) die zu übertragenden Nutzdaten verschlüsselt.

19. Zugangsberechtigungskarte (100) nach Anspruch 18, **dadurch gekennzeichnet, dass** dem gewählten Diensteanbieter (1) und zusätzlich dem gewählten Dienst der Nutzdatenschlüssel (11, 12, 13, 14) zugeordnet ist, mit dem die Verschlüsselungseinheit (15) die zu übertragenden Nutzdaten verschlüsselt.

20. Zugangsberechtigungskarte (100) nach einem der Ansprüche 15 bis 19, **dadurch gekennzeichnet, dass** die Verschlüsselungseinheit (15) mit dem für die Authentifizierung des Telekommunikationsendgerätes (5) ausgewählten Schlüssel (11, 12, 13, 14) auch die zu übertragenden Nutzdaten verschlüsselt.

## Claims

1. Method for encrypting data, the encrypted data being transmitted between a service provider (1) and a telecommunication terminal (5) via a telecommunication network (10), the data to be transmitted via the telecommunication network (10) being encrypted in dependence on the selected service provider (1), **characterized in that** before a transmission of useful data between the telecommunication terminal (5) and the service provider (1), an identification request by the service provider (1) to the telecommunication terminal (5) is sent, **in that** from a set of keys (11, 12, 13, 14) stored in the telecommunication terminal (5) or in an access authorization card (100) introduced into the telecommunication terminal (5), the one which is allocated to the selected service provider (1) is selected, **in that** the identification request is encrypted with the selected key (11, 12, 13, 14) so that an encrypted answer is produced, and **in that** the response is transmitted from the telecommunication terminal (5) to the service provider (1) for an authentication of the telecommunication terminal (5).

2. Method according to Claim 1, **characterized in that** for the transmission of the data, a service of the selected service provider (1) is used and **in that** the data to be transmitted via the telecommunication network (10) are encrypted in dependence on the selected service.

3. Method according to Claim 2, **characterized in that** from the set of keys (11, 12, 13, 14) stored in the telecommunication terminal (5) or in the access authorization card (100) introduced into the telecommunication terminal (5), the one which is allocated to the selected service provider (1) and additionally to the selected service is selected.

4. Method according to one of the preceding claims, **characterized in that** a useful-data key (11, 12, 13, 14), by means of which the useful data to be transmitted are encrypted, is allocated to the selected service provider (1).

5. Method according to Claim 4, **characterized in that** the useful-data key (11, 12, 13, 14) by means of which the useful data to be transmitted are encrypted is allocated to the selected service provider (1) and additionally to the selected service.

6. Method according to one of the preceding claims, **characterized in that** the useful data to be transmitted are also encrypted with the key (11, 12, 13, 14) selected for the authentication of the telecommunication terminal (5).

7. Telecommunication terminal (5) for carrying out a method according to one of the preceding claims by means of an encryption unit (15) allocated to the telecommunication terminal (5), **characterized in that** a memory (20) allocated to the telecommunication terminal (5) is provided in which a number of keys (11, 12, 13, 14) in each case allocated to one service provider (1) are stored, by means of which data to be transmitted to the respective service provider (1) via a telecommunication network (10) are encrypted in the encryption unit (15), **in that** the encryption unit (15) encrypts an identification request, received from a selected service provider (1), with a key (11, 12, 13, 14) stored in the memory (20) so that an encrypted response is produced, the key (11, 12, 13, 14) selected from the memory (20) for encryption being allocated to the selected service provider (1), and **in that** a transmitting device (25) is provided which sends the encrypted response to the service provider (1) for an authentication of the telecommunication terminal (5).

8. Telecommunication terminal (5) according to Claim 7, **characterized in that** the at least one key (11, 12, 13, 14) stored in the memory (20) is additionally allocated to a service by means of which the data are transmitted between the telecommunication terminal (5) and the service provider (1).

9. Telecommunication terminal (5) according to Claim 7 or 8, **characterized in that** the encryption unit (15) encrypts the identification request with a key (11, 12, 13, 14) from the memory (20), from the set of keys (11, 12, 13, 14) stored in the telecommunication terminal (5) the one being selected which is allocated to the selected service provider (1) and additionally to a selected service for the data transmission.

10. Telecommunication terminal (5) according to one of Claims 7 to 9, **characterized in that** a useful-data key (11, 12, 13, 14), stored in the memory (20), is allocated to the selected service provider (1), by means of which key the encryption unit (15) encrypts the useful data to be transmitted.

11. Telecommunication terminal (5) according to Claim 10, **characterized in that** the useful-data key (11, 12, 13, 14), by means of which the encryption unit (15) encrypts the useful data to be transmitted, is allocated to the selected service provider (1) and additionally to the selected service.

12. Telecommunication terminal (5) according to one of Claims 7 to 11, **characterized in that** the encryption unit (15) also encrypts the useful data to be transmitted by means of the key (11, 12, 13, 14) selected for the authentication of the telecommunication terminal (5).

13. Telecommunication terminal (5) according to one of Claims 7 to 12, **characterized in that** the encryption unit (15) and the memory (20) are arranged in the telecommunication terminal (5).

14. Telecommunication terminal (5) according to one of Claims 7 to 12, **characterized in that** the telecommunication terminal (5) comprises an input slot for inserting an access authorization card (100), the access authorization card (100) comprising the encryption unit (15) and the memory (20), and **in that** the telecommunication terminal (5) comprises an interface unit (110) for exchanging encrypted data with the access authorization card (100).

15. Access authorization card (100) for carrying out a method according to one of Claims 1 to 6 comprising an encryption unit (15), **characterized in that** a memory (20) is provided in which a number of keys (11, 12, 13, 14) in each case allocated to one service provider (1) are stored, by means of which data to be transmitted to the respective service provider (1) via a telecommunication network (10) are encrypted in the encryption unit (15), **in that** an interface unit (105) is provided for exchanging encrypted data with a telecommunication terminal (5), **in that** the encryption unit (15) encrypts an identification request received from a selected service provider (1) with a key (11, 12, 13, 14) stored in the memory (20) so that an encrypted response is produced, the key (11, 12, 13, 14) selected from the memory (20) for encryption being allocated to the selected service provider (1), and **in that** the encrypted response is sent to the service provider (1) for an authentication of the telecommunication terminal (5) by a transmitting device (25) of the telecommunication terminal (5).

16. Access authorization card (100) according to Claim 15, **characterized in that** the at least one key (11, 12, 13, 14) stored in the memory (20) is additionally allocated to a service by means of which the data are transmitted between the telecommunication terminal (5) and the service provider (1).

17. Access authorization card (100) according to Claim 15 or 16, **characterized in that** the encryption unit (15) encrypts the identification request with a key (11, 12, 13, 14) from the memory (20), from the set of keys (11, 12, 13, 14) stored in the memory (20) the one being selected which is allocated to the selected service provider (1) and additionally to a selected service for the data transmission.

18. Access authorization card (100) according to one of Claims 15 to 17, **characterized in that** a useful-data key (11, 12, 13, 14) stored in the memory (20) is allocated to the selected service provider (1), by means of which key the encryption unit (15) encrypts the useful data to be transmitted.

19. Access authorization card (100) according to Claim 18, **characterized in that** the useful-data key (11, 12, 13, 14) by means of which the encryption unit (15) encrypts the useful data to be transmitted is allocated to the selected service provider (1) and additionally to the selected service.

20. Access authorization card (100) according to one of Claims 15 to 19, **characterized in that** the encryption unit (15) also encrypts the useful data to be transmitted by means of the key (11, 12, 13, 14) selected for the authentication of the telecommunication terminal (5).

## Revendications

1. Procédé destiné au cryptage de données, dans lequel les données cryptées sont transmises entre un fournisseur de services (1) et un terminal de télécommunication (5) par l'intermédiaire d'un réseau de télécommunication (10), dans lequel les données à transmettre par l'intermédiaire du réseau de télécommunication (10) sont cryptées en fonction du fournisseur de services sélectionné (1), **caractérisé en ce que**, avant une transmission de données utilisateur entre le terminal de télécommunication (5) et le fournisseur de services (1), une demande d'identification est envoyée par le fournisseur de services (1) au terminal de télécommunication (5), **en ce que**, parmi les clés (11, 12, 13, 14) stockées dans le terminal de télécommunication (5) ou dans une carte d'autorisation d'accès (100) introduite dans le terminal de télécommunication (5), on sélectionne celle qui est affectée au fournisseur de services sélectionné (1), **en ce que** la demande d'identification est cryptée au moyen de la clé sélectionnée (11, 12, 13, 14) de sorte qu'il en résulte une réponse cryptée, et **en ce que** la réponse est transmise du terminal de télécommunication (5) au fournisseur de services (1) pour une authentification du terminal de télécommunication (5).

2. Procédé selon la revendication 1, **caractérisé en ce que**, pour la transmission des données, un service du fournisseur sélectionné (1) est utilisé et **en ce que** les données devant être transmises par l'intermédiaire du réseau de télécommunication (10) sont cryptées en fonction du service sélectionné.

3. Procédé selon la revendication 2, **caractérisé en ce que**, parmi les clés (11, 12 13, 14) stockées dans le terminal de télécommunication (5) ou dans la carte d'autorisation d'accès (100) introduite dans le terminal de télécommunication (5), on sélectionne celle qui est affectée au fournisseur de services sélectionné (1) ainsi qu'au service sélectionné.

4. Procédé selon l'une quelconque des revendications précédentes, **caractérisé en ce qu'**on affecte au fournisseur de services sélectionné (1) une clé de données utilisateur (11, 12, 13 14) au moyen de laquelle les données utilisateur à transmettre sont cryptées.

5. Procédé selon la revendication 4, **caractérisé en ce qu'**on affecte au fournisseur de services sélectionné (1) ainsi au service sélectionné la clé de données utilisateur (11, 12, 13 14) au moyen de laquelle les données utilisateur à transmettre sont cryptées.

6. Procédé selon l'une quelconque des revendications précédentes, **caractérisé en ce que** les données utilisateur à transmettre sont également cryptées au moyen de la clé sélectionnée (11, 12, 13 14) pour l'authentification du terminal de télécommunication (5).

7. Terminal de télécommunication (5) destiné à la mise en oeuvre d'un procédé selon l'une quelconque des revendications précédentes, comprenant une unité de cryptage (15) affectée au terminal de télécommunication (5), **caractérisé en ce qu'**il est prévu une mémoire (20) affectée au terminal de télécommunication (5), dans laquelle sont stockées plusieurs clés (11, 12, 13, 14) affectées à un fournisseur de services (1) respectif, et au moyen desquelles des données à transmettre au fournisseur de services respectif (1) par l'intermédiaire d'un réseau de télécommunication (10) sont cryptées dans l'unité de cryptage (15), **en ce que** l'unité de cryptage (15) crypte une demande d'identification reçue d'un fournisseur de services sélectionné (1) au moyen d'une clé (11, 12, 13, 14) stockée dans la mémoire (20) de sorte qu'il en résulte une réponse cryptée, dans lequel la clé sélectionnée (11, 12, 13, 14) pour le cryptage provenant de la mémoire (20) est affectée au fournisseur de services sélectionné (1), et **en ce qu'**il est prévu un dispositif d'émission (25) qui envoie la réponse cryptée au fournisseur de services (1) pour une authentification du terminal de télécommunication (5).

8. Terminal de télécommunication (5) selon la revendication 7, **caractérisé en ce que** l'au moins une clé (11, 12, 13, 14) stockée dans la mémoire (20) est en outre affectée à un service au moyen duquel les données sont transmises entre le terminal de télécommunication (5) et le fournisseur de services (1).

9. Terminal de télécommunication (5) selon la revendication 7 ou 8, **caractérisé en ce que** l'unité de cryptage (15) crypte la demande d'identification au moyen d'une clé (11, 12, 13, 14) provenant de la mémoire (20), dans lequel on sélectionne parmi les clés (11, 12, 13, 14) stockées dans le terminal de télécommunication (5) celle qui est affectée au fournisseur de services sélectionné (1) ainsi qu'à un service sélectionné pour la transmission de données.

10. Terminal de télécommunication (5) selon l'une quelconque des revendications 7 à 9, **caractérisé en ce qu'**on affecte au fournisseur de services sélectionné (1) une clé de données utilisateur (11, 12, 13, 14) stockée dans la mémoire (20), au moyen de laquelle l'unité de cryptage (15) crypte les données utilisateur à transmettre.

11. Terminal de télécommunication (5) selon la revendication 10, **caractérisé en ce qu'**on affecte au fournisseur de services sélectionné (1) ainsi qu'au service sélectionné la clé de données utilisateur (11, 12, 13, 14) au moyen de laquelle l'unité de cryptage (15) crypte les données utilisateur à transmettre.

12. Terminal de télécommunication (5) selon l'une quelconque des revendications 7 à 11, **caractérisé en ce que** l'unité de cryptage (15) crypte également les données utilisateur à transmettre au moyen de la clé (11, 12, 13, 14) sélectionnée pour l'authentification du terminal de télécommunication (5).

13. Terminal de télécommunication (5) selon l'une quelconque des revendications 7 à 12, **caractérisé en ce que** l'unité de cryptage (15) et la mémoire (20) sont disposées dans le terminal de télécommunication (5).

14. Terminal de télécommunication (5) selon l'une quelconque des revendications 7 à 12, **caractérisé en ce que** le terminal de télécommunication (5) comprend un orifice d'entrée pour l'introduction d'une carte d'autorisation d'accès (100), la carte d'autorisation d'accès (100) comprenant l'unité de cryptage (15) et la mémoire (20), et **en ce que** le terminal de télécommunication (5) comprend une unité d'interface (110) destinée à l'échange de données cryptées avec la carte d'autorisation d'accès (100).

15. Carte d'autorisation d'accès (100) destinée à la mise en oeuvre d'un procédé selon l'une quelconque des revendication 1 à 6, comprenant une unité de cryptage (15), **caractérisée en ce qu'**il est prévu une mémoire (20) dans laquelle sont stockées plusieurs clés (11, 12, 13, 14) affectées à un fournisseur de services respectif (1) et au moyen desquelles des données à transmettre au fournisseur de services respectif (1) par l'intermédiaire d'un réseau de télécommunication (10) sont cryptées dans l'unité de cryptage (15), **en ce qu'**une unité d'interface (105) est prévue pour l'échange de données cryptées avec un terminal de télécommunication (5), **en ce que** l'unité de cryptage (15) crypte une demande d'identification reçue d'un fournisseur de services sélectionné (1) au moyen d'une clé (11, 12, 13, 14) stockée dans la mémoire (20) de sorte qu'il en résulte une réponse cryptée, la clé (11, 12, 13, 14) provenant de la mémoire et sélectionnée pour le cryptage étant affectée au fournisseur de services sélectionné (1), et **en ce qu'**un envoi de la réponse cryptée au fournisseur de services (1) est effectué pour une authentification du terminal de télécommunication (5) par l'intermédiaire d'un dispositif d'émission (25) du terminal de télécommunication (5).

16. Carte d'autorisation d'accès (100) selon la revendication 15, **caractérisée en ce que** l'au moins une clé (11, 12, 13, 14) stockée dans la mémoire (20) est en outre affectée à un service au moyen duquel les données sont transmises entre le terminal de télécommunication (5) et le fournisseur de services (1).

17. Carte d'autorisation d'accès (100) selon la revendication 15 ou 16, **caractérisée en ce que** l'unité de cryptage (15) crypte la demande d'identification au moyen d'une clé (11, 12, 13, 14) provenant de la mémoire (20), dans laquelle on sélectionne parmi les clés (11, 12, 13, 14) stockées dans la mémoire (20) celle qui est affectée au fournisseur de services sélectionné (1) ainsi qu'à un service sélectionné pour la transmission de données.

18. Carte d'autorisation d'accès (100) selon l'une quelconque des revendications 15 à 17, **caractérisée en ce qu'**on affecte au fournisseur de services sélectionné (1) une clé de données utilisateur (11, 12, 13, 14) stockée dans la mémoire (20) au moyen de laquelle l'unité de cryptage (15) crypte les données utilisateur à transmettre.

19. Carte d'autorisation d'accès (100) selon la revendication 18, **caractérisée en ce qu'**on affecte au fournisseur de services sélectionné (1) ainsi qu'au service sélectionné la clé de données utilisateur (11, 12, 13, 14) au moyen de laquelle l'unité de cryptage (15) crypte les données utilisateur à transmettre.

20. Carte d'autorisation d'accès (100) selon l'une quelconque des revendications 15 à 19, **caractérisée en ce que** l'unité de cryptage (15) crypte également les données utilisateur à transmettre au moyen de la clé (11, 12, 13, 14) sélectionnée pour l'authentification du terminal de télécommunication (5).
